# EUROPÄISCHE PATENTSCHRIFT

(11) **EP 2 233 287 B1**
(45) Veröffentlichungstag und Bekanntmachung des Hinweises auf die Patenterteilung: **14.11.2012**
(21) Anmeldenummer: 09005988.2
(22) Anmeldetag: 30.04.2009
(51) Int. Cl.: B41C 1/04, B44C 5/04, H04N 1/60

(54) **Verfahren zur Herstellung von Plattenkörpern mit im Tiefdruckverfahren bedruckten Druckbögen**
Method for producing board bodies with printed sheets using the gravure printing method
Procédé de fabrication de corps de plaques dotés de feuilles imprimées selon le procédé d'impression en creux

(30) Priorität: 24.03.2009 EP 09004180
(43) Veröffentlichungstag der Anmeldung: 29.09.2010
(73) Patentinhaber: Hülsta-Werke Hüls GmbH & CO. KG, 48703 Stadtlohn (DE); Flooring Industries Limited, SARL, 8070 Bertrange (LU)
(72) Erfinder: Tünte, Udo, 46348 Raesfeld (DE); Petersen, Frank, 48653 Coesfeld (DE)
(74) Vertreter: Weidener, Jörg Michael

(56) Entgegenhaltungen:
- EP-A1- 0 054 405
- EP-A1- 1 858 244
- EP-A2- 0 675 636
- WO-A1-2008/110275
- DE-A1- 19 947 397
- DE-A1-102008 031 735
- US-A- 5 283 671
- RODRIGUEZ M ED - INSTITUTE OF ELECTRICAL AND ELECTRONICS ENGINEERS: "A graphic arts perspective on RGB-to-CMYK conversion" PROCEEDINGS OF THE INTERNATIONAL CONFERENCE ON IMAGE PROCESSING. (ICIP). WASHINGTON, OCT. 23 - 26, 1995; [PROCEEDINGS OF THE INTERNATIONAL CONFERENCE ON IMAGE PROCESSING. (ICIP)], LOS ALAMITOS, IEEE COMP. SOC. PRESS, US LNKD- DOI:10.1109/ICIP.1995.53, Bd. 2, 23. Oktober 1995 (1995-10-23), Seiten 319-322, XP010197089 ISBN: 978-0-7803-3122-8

## Beschreibung

Die Erfindung betrifft ein Verfahren zur Herstellung von Plattenkörpern zur Verwendung im Boden-, Wand- oder Deckenbereich, wie Paneelen, sowie im Möbelbereich, nach dem Oberbegriff des Anspruchs 1.

Verfahren zur Herstellung von Plattenkörpern im sogenannten Dekortiefdruckverfahren sind bereits seit Jahrzehnten aus der Praxis bekannt. Im Dekortiefdruck, wo eine Vielzahl von Farben und Farbmischungen zum Einsatz kommen, besteht die Druckform in der Regel aus mehreren Druckzylindern mit jeweils einer Kupferbeschichtung mit einer oder mehreren Kupferschichten. Die Zylinder können eine Breite von mehreren Metern und einen Durchmesser von bis zu 1,6 m haben. In die äußere Kupferschicht wird das Druckbild in Form sogenannter Näpfchen eingraviert. Die äußere Kupferschicht kann im übrigen verchromt werden, um eine bessere Haltbarkeit zu erreichen. Dies wird vor allem in höheren Auflagenbereichen genutzt. Die Art der Gravur im Tiefdruck ermöglicht in der Regel eine exakte und zuverlässige Wiederholbarkeit des Druckergebnisses. Zur Herstellung großer Mengen an bedrucktem Druckpapier ist das Dekortiefdruckverfahren derzeit das einzig wirtschaftliche Druckverfahren.

Nach dem Tiefdrucken wird das mit dem Dekor bedruckte Druckpapier in der Regel beharzt und dann in Druckbögen geschnitten. Anschließend werden die Druckbögen mit vorbereiten Grundkörpern verpreßt. Hierzu werden üblicherweise Kurztaktpressen (KT-Pressen) eingesetzt.

Die Erstellung von mehrfarbigen Dekoren, beispielsweise von bestimmten Holzmaserungen, mit bestimmten Farben ist ausgesprochen aufwendig und mit einer Vielzahl von Arbeitsschritten verbunden. Zunächst einmal wird üblicherweise eine Dekorvorlage vorbereitet. Hiermit ist das Erstellen eines Dekorbildes gemeint. Bei einem bestimmten Holzdekor werden dabei beispielsweise bestimmte Maserungen mit unterschiedlichen Schattierungen sowie entsprechende Astansätze oder dergleichen dargestellt. Nach Erstellung der Vorlage wird diese eingescannt. Es erfolgt dann eine Überarbeitung der Vorlage am Rechner. Ist die Vorlage des Designs am Rechner erstellt, wird üblicherweise ein Proof hergestellt, der dem Kunden, der die Vorlage bestellt hat, vorgestellt wird. Findet der Proof die Zustimmung des Kunden, werden aus den RGB-Daten des RGB-Farbsystems einzelne Farbkanäle für die Tiefdruckeinrichtung herausgezogen. Man spricht hier von Separation. Üblicherweise besteht das Dekor aus drei Mischfarben, so daß drei Farbkanäle erstellt werden. Dabei ist jeder Farbkanal einem Druckzylinder zugeordnet.

Da die Gravur von Produktions-Tiefdruckzylindern mit einem erheblichen Aufwand verbunden ist, ist es in den Druckereien üblich, das Tiefdruckergebnis zunächst im Labormaßstab zu erstellen. Hierzu dienen kleinere Tiefdruckmaschinen, die Laborzylinder aufweisen. Die Laborzylinder sind erheblich kleiner als die Produktionszylinder. Nach der Gravur der Laborzylinder werden die gewünschten Farben für die einzelnen Farbkanäle ausgewählt. Anschließend erfolgt ein Tiefdruck im Labormaßstab. Von dem Druckergebnis wird ein Stück Druckpapier als Labor-Druckbogen ausgeschnitten, der dann beharzt wird. Nach dem Beharzen wird der Labor-Druckbogen auf einem Grundkörper eines Plattenkörpers mit einer Laborpresse aufgepreßt. Anschließend wird das Dekor des im Labor hergestellten Plattenkörpers mit der ursprünglichen Dekorvorlage verglichen. Die einzelnen Farben für die einzelnen Zylinder werden in weiteren Schritten so angepaßt, bis das verpreßte Dekor der Vorlage möglichst nahe kommt.

Des weiteren ist es häufig so, dass die Dekorfarbe nicht der Vorlage entspricht. Von daher müssen die einzelnen Farbkanäle und die diesbezüglichen Farben überarbeitet werden. Nach entsprechender Änderung wird erneut der Laborzylinder graviert, im Labor tiefgedruckt, geharzt und verpresst. Anschließend wird das Laborergebnis erneut mit der ursprünglichen Vorlage verglichen.

Außerdem kommt es auch vor, dass das gedruckte Dekor nur durch Farbangleichung nicht der Vorlage weiter angenähert werden kann. Wenn die Dekorvorlage trotz genauester Farbanpassung der einzelnen Zylinder nicht mit dem Laborzylindersatz erreicht werden kann, ist es in der Regel erforderlich, daß die Laborzylinder in ihrer Gravur überarbeitet werden müssen.

Da die Änderung der Laborzylinder und die Einstellung der richtigen Farbkanäle üblicherweise einige Tage in Anspruch nimmt und der Kunde der Dekorvorlage und der Drucker in der Regel nicht in einem Ort ansässig sind, bedeutet die korrekte Dekorerstellung einen erheblichen zeitlichen und kostenmäßigen Aufwand. Dabei ist zu berücksichtigen, daß es nicht selten vorkommt, daß eine Änderung der Farbauswahl und/oder der Gravur der Laborzylinder zwischen fünf- bis zehn- und zum Teil sogar mehr als zehnmal stattfindet, bis das gewünschte Dekor erstellt ist.

Ist das richtige Dekor von der Gravur und der Farbauswahl im Labormaßstab gefunden, werden die Labordaten hinsichtlich der Gravur und der Farbauswahl in Produktionsdaten überarbeitet. Anschließend erfolgt die Gravur der Produktionszylinder. Besondere Probleme bereitet in diesem Zusammenhang vor allem das Nachstellen der am Laborzylinder festgestellten Farbstellung für die drei Kanäle bzw. drei Produktionszylinder. Anschließend kann mit der Produktion begonnen werden.

Es ist erkennbar, daß der Aufwand zum Erstellen eines Dekors und Einrichten einer Produktions-Tiefdruckvorrichtung mit erheblichem Aufwand verbunden ist.

Darüber hinaus ergibt sich beim Dekortiefdruck der Nachteil, daß, wenn die Farbmischung eines Farbkanals eines Produktionszylinders aufgebraucht ist, oder wenn das Dekor erneut produziert werden muß, es schwierig ist, den korrekten Farbton wieder nachzustellen. Die bei den üblichen Dekoren eingesetzten Farben der einzelnen Farbkanäle sind keine standardisierten Farben, sondern Farbmischungen. Da es gerade im Bereich der Holzdekore darauf ankommt, reproduzierbare Druckergebnisse zu haben, ergibt sich in der Produktion häufig eine Produktionspause von einigen Stunden, bis die korrekte Farbauswahl wieder vorlegt.

Aus der WO 2008/110275 A1 und der EP 0 054 405 A1 geht jeweils ein Verfahren der eingangs genannten Art hervor. Im Vorfeld der Produktion im Tiefdruckverfahren ist bei diesem Stand der Technik allerdings zunächst ein Dekor zu erstellen, was sehr zeit- und kostenaufwändig ist. Insofern wird auf die vorstehenden Ausführungen des aus der Praxis bekannten Standes der Technik Bezug genommen.

Aus der EP 0 675 636 A1 ist ein Verfahren zur Bildbearbeitung bekannt, bei dem vorgesehen ist, im Rahmen der Druckvorstufe das Druckmuster einzuscannen, das Resultat auf dem Bildschirm darzustellen und zu bearbeiten, wobei bei Geräten und eigenen Lichtquellen das RGB-Farbsystem verwendet wird. Der Druck von Daten erfolgt dann im CMYK-Farbsystem.

Aufgabe der vorliegenden Erfindung ist es, ein Verfahren der eingangs genannten Art zur Verfügung zustellen, mit dem Dekore für den Tiefdruck schneller und einfacher erstellt werden können.

Zur Lösung der vorgenannten Aufgabe ist bei einem Verfahren der eingangs genannten Art nun vorgesehen, daß die RGB-Daten von der Rechnereinrichtung in CMYK-Daten des CMYK-Farbsystems umgewandelt werden und daß die Druckzylinder auf der Grundlage der CMYK-Daten graviert werden.

Anders als beim aus der Praxis bekannten Stand der Technik, wo die RGB-Daten in einzelne Kanäle bzw. Laborzylinder aufgeteilt werden, wobei der Farbraum aus drei (Misch-)Farben besteht, ist es bei der Erfindung nun so, daß auf das CMYK-Farbsystem zurückgegriffen wird. Die RGB-Daten werden hierzu in CMYK-Daten umgerechnet. Da auf ein anderes Farbsystem als beim bekannten Dekortiefdruckverfahren zurückgegriffen wird, ist es grundsätzlich sogar möglich, auf Versuche im Labormaßstab und den Einsatz einer Labor-Tiefdruckeinrichtung zu verzichten, wenngleich es bei der Erfindung natürlich auch möglich ist, gemäß dem erfindungsgemäßen Prinzip die in CMYK-Daten umgewandelten RGB-Daten in entsprechende Laborzylinder zu gravieren. Grundsätzlich ist dies jedoch nicht unbedingt erforderlich.

Im Ergebnis bietet die Erfindung den ganz wesentlichen Vorteil, daß mit der Produktion im Tiefdruck nach Erstellen der Dekorvorlage auf einer Anzeigeeinrichtung eines Rechners im RGB-Farbsystem sehr viel schneller begonnen werden kann. Die Farbausmusterung des bekannten Verfahrens mit drei Kanälen, über die drei immer wieder neu zusammenzustellende Mischfarben eingesetzt werden, entfällt hier vollständig. Letztlich wird bei der Erfindung auf einen Vierfarbendruck zurückgegriffen, bei dem die jeweils eingesetzte Farbe konstant bzw. gleichbleibend ist. Dabei kann es so sein, daß im CMYK-Farbsystem die hellste Druckfarbe zuerst gedruckt wird. Es werden dann vier Druckzylinder eingesetzt, bei denen die Druckfarbenreihenfolge Y (Yellow), C (Cyan), M (Magenta) und K (Key-Schwarz als Farbtiefe) ist. Die Farbreihenfolge kann aber auch K, C, M, Y sein, wobei auch andere Reihenfolgen grundsätzlich möglich sind. Unabhängig von der Druckfarbenreihenfolge ist der Farbraum durch die vorgenannten vier Farben zwar beschränkt, jedoch ist festgestellt worden, daß sich selbst aufwendige Holzdekore problemlos über das CMYK-Farbsystem darstellen lassen.

Üblicherweise wird eine Dekorvorlage, die als Dekor für Plattenkörper vorgesehen ist, zunächst manuell und/oder elektronisch vorbereitet. Unter dem Ausdruck "Vorbereitung" können im Ergebnis alle Vorgänge verstanden werden, über die ein Dekorbild hergestellt werden kann. Dies reicht von dem manuellen Zeichnen, was sehr aufwendig ist, bis zum einfachen Ausschneiden eines bereits vorhandenen Bildes. Bei der Dekorvorlage kann es sich beispielsweise auch um einen entsprechenden Schnitt durch einen Baumstamm handeln. Um die körperlich vorliegende bzw. vorbereitete Dekorvorlage in elektronischer Form bearbeiten zu können, wird diese eingescannt.

Ein wesentlicher Punkt der Bearbeitung besteht darin, daß sich über den Umfang des Druckzylinders eine sog. Rapportierung ergibt, so daß sich ein fortlaufendes, sich wiederholendes Dekorbild beim Druck ergibt. Dementsprechend werden die Daten der eingescannten Dekorvorlage entsprechend überarbeitet.

Vor oder nach der Überarbeitung zur Rapportierung wird verfahrensgemäß eine manuelle Farbmusterung der an der Anzeigeeinrichtung angezeigten Dekorvorlage vorgenommen. Die Farbmusterung, die letztlich am Bildschirm bzw. der Anzeigeeinrichtung der Rechnereinrichtung vorgenommen wird, erfolgt auf Basis des RGB-Farbsystems. Sobald die gewünschte Dekorfarbe erreicht ist, wird ein Proof der an der Anzeigeeinrichtung angezeigten Dekorvorlage mittels eines Digitalproofdruckers erstellt. Der Proof basiert auf dem CMYK-Farbsystem, dessen Farbraum durch die vorgenannten vier Farben eingeschränkt ist. Dementsprechend differiert in der Regel die Dekorfarbe des Proofs mit der über das RGB-Farbsystem auf der Anzeigeeinrichtung angezeigten Dekorfarbe.

Um eine schnelle Angleichung zwischen der Dekorfarbe des Proofs und der auf der Anzeigeeinrichtung dargestellten Dekorfarbe zu erzielen, wird eine automatische Kalibrierung vorgenommen. Hierzu kann ein Kalibrierungschart eingescannt werden, wobei die Farbdaten des Charts automatisch mit den RGB-Farbdaten verglichen und dann über entsprechende Korrekturfaktoren entsprechend angepaßt bzw. abgeglichen werden.

Nach der Kalibrierung kann es sich anbieten, daß ein weiterer Chart unter Berücksichtigung der kalibrierten CMYK-Daten erstellt wird. Dieser wird dann erneut mit dem im RGB-Farbsystem auf der Anzeigeeinrichtung dargestellten Dekor verglichen. Dieser Vorgang kann dann bedarfsweise mehrfach wiederholt werden, bis die Dekorfarbe des Charts der Dekorfarbe des auf der Anzeigeeinrichtung angezeigten Dekors entspricht.

In der Regel handelt es sich bei den im CMYK-Farbsystem eingesetzten Farben um definierte Farben. Dennoch kann es grundsätzlich Abweichungen geben. Da im Dekortiefdruck insbesondere für Holzdekore eine hohe Farbgenauigkeit und -echtheit erforderlich ist, bietet es sich besonders an, daß die gleichen Farbpigmente und/oder Farbzusammensetzungen für die Druckfarben des Proofdruckers und die Druckfarbe der Druckzylinder der Tiefdruckeinrichtung verwendet werden. Durch die gleichen Farbpigmente und/oder Farbzusammensetzungen ist, auch wenn die Druckfarben im Hinblick auf das Auftragsverfahren beim Digitaldruck einerseits und im Tiefdruck andererseits unterschiedlich sind, eine hohe Farbechtheit und Wiederholbarkeit der Dekorfarben gewährleistet.

Weitere Merkmale, Vorteile und Anwendungsmöglichkeiten der vorliegenden Erfindung ergeben sich aus der nachfolgenden Beschreibung von Ausführungsbeispielen anhand der Zeichnung und der Zeichnung selbst. Dabei bilden alle beschriebenen und/oder bildlich dargestellten Merkmale für sich und in beliebiger Kombination den Gegenstand der vorliegenden Erfindung, unabhängig von ihrer Zusammenfassung in den Ansprüchen oder deren Rückbeziehung.

Es zeigt
- Fig. 1: eine schematische Darstellung des erfindungsgemäßen Verfahrens,
- Fig. 2: eine schematische Darstellung einer Dekortiefdruckeinrichtung und
- Fig. 3: eine schematische Darstellung eines Plattenkörpers.

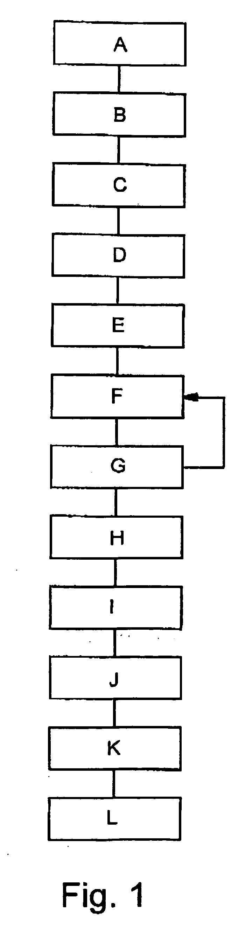

In Fig. 1 ist das erfindungsgemäße Verfahren des Dekortiefdrucks schematisch mit den einzelnen Verfahrensschritten dargestellt. Zunächst wird im Verfahrensschritt A eine Dekorvorlage vorbereitet. Dies kann manuell und/oder elektronisch erfolgen. Als Dekor der Vorlage handelt es sich üblicherweise um eine bestimmte Holzmaserung.

Nach Erstellung der Vorlage wird diese dann im Schritt B eingescannt. Es ist darauf hinzuweisen, daß es grundsätzlich auch möglich ist, daß die Vorlage bereits elektronisch, das heißt an einem Rechner, erstellt wird, so daß das Einscannen entfallen kann.

Anschließend erfolgt im Schritt C eine Überarbeitung der Vorlage an einer Rechnereinrichtung.

Im Schritt D wird das erstellte Design dann dahingehend überarbeitet, daß sich eine Rapportierung ergibt mit der Folge, daß das Design sich quasi ständig wiederholt. Hinzuweisen ist darauf, daß der Schritt D allerdings nicht unbedingt erforderlich ist, da es Dekore gibt, die nicht unendlich gedruckt werden müssen, eine Rapportierung also nicht zwangsweise notwendig ist.

Nachdem das Design an eine Anzeigeeinrichtung der Rechnereinrichtung überarbeitet worden ist und das Design in der gewünschten Form von der Anzeigeeinrichtung im RGB-Farbsystem angezeigt wird, erfolgt im Schritt E eine Umwandlung der RGB-Daten durch die Rechnereinrichtung in CMYK-Daten des CMYK-Farbsystems. Bei der Umwandlung werden die RGB-Daten automatisch von der Rechnereinrichtung in CMYK-Daten umgewandelt.

Anschließend wird im Schritt F ein Proof, das heißt ein Farbausdruck, auf einem Proof-Drucker erstellt. Bei dem Proof-Drucker handelt es sich um einen Digitaldrucker. Ebenfalls im Schritt F wird eine manuelle und/oder automatische Farbmusterung des gedruckten Proofs mit dem auf der Anzeigeeinrichtung der Rechnereinrichtung im RGB-Farbsystem dargestellten Dekor vorgenommen.

Da das im RGB-Farbsystem dargestellte Design in der Regel vom im CMYK-Farbsystem dargestellten Design abweicht, wird eine Kalibrierung im Schritt G vorgenommen. Hierbei handelt es sich um einen automatischen Abgleich der Farben des auf der Anzeigeeinrichtung dargestellten Designs entsprechend den RGB-Farbsystem und des auf dem Proof gedruckten Designs entsprechend dem CMYK-Farbsystem. Hierzu kann das Design und/oder die Farben eines Kalibrierungscharts eingescannt werden, so daß über die Rechnereinrichtung unmittelbar die einzelnen Farben verglichen werden können. Dabei werden Ausgleichsfaktoren zur Farbenkorrektur berechnet. Auf der Grundlage des Kalibrierungsergebnisses werden dann die CMYK-Daten entsprechend angepaßt. Dieser Vorgang kann mehrfach wiederholt werden.

Da das CMYK-Farbsystem auf standardisierten Farben beruht, ist es grundsätzlich sogar möglich, daß die Umwandlung der Daten im Schritt E unter Berücksichtigung von bereits ermittelten bzw. vorbestimmten Kalibrierungsfaktoren erfolgt, die bereits die Abweichungen der Farben des im CMYK-Farbsystem gedruckten Proofs mit den im RGB-Farbsystem dargestellten Farben des auf der Anzeigeeinrichtung dargestellten Designs von vornherein berücksichtigt.

Anschließend erfolgt im Schritt H die Gravur der einzelnen Druckzylinder auf der Grundlage der CMYK-Daten, die von der Rechnereinrichtung unter Berücksichtigung des oder der Kalibrierungsfaktoren errechnet worden sind.

Nach der Gravur kann mit dem Druck des Druckpapiers im Schritt I begonnen werden. Es ergibt sich dann ein quasi unendliches Druckpapier mit sich auf dem Druckpapier entsprechend wiederholendem Dekor.

Nach dem Dekortiefdruck wird das bedruckte Druckpapier im Schritt J beharzt. Dazu wird das üblicherweise auf einer Rolle befindliche bedruckte Druckpapier abgerollt, durchläuft ein Harzbad und wird nach dem Trocknen wieder aufgerollt.

Im Schritt K erfolgt das Schneiden des Druckpapiers zu einer Vielzahl von Druckbögen. Das Druckpapier wird dazu jedenfalls in Längs-, in der Regel auch in Querrichtung zerteilt, so daß sich die einzelnen Druckbögen ergeben, deren Flächenabmaße den Flächenabmaßen der Grundkörper der Plattenkörper entsprechen.

Bei den Grundkörpern kann es sich um Körper aus Holz- oder Holzwerkstoffplatten, insbesondere HDF-, MDF-, Span- oder OSB-Platten, aber auch um Gipskarton- oder Gipsfaserplatten oder auch Kunststoffplatten handeln. Auch andere Materialien sind ohne weiteres möglich. Auf die Herstellung dieser Platten wird im einzelnen nicht eingegangen. Deren Herstellung ist im Stand der Technik grundsätzlich bekannt.

Im Schritt L werden die Druckbögen mit den Grundkörpern, beispielsweise in einer KT-Preßeinrichtung, verpreßt. Dabei kann gleichzeitig eine sich oberhalb des Druckbogens befindliche Schutzschicht mit verpreßt werden.

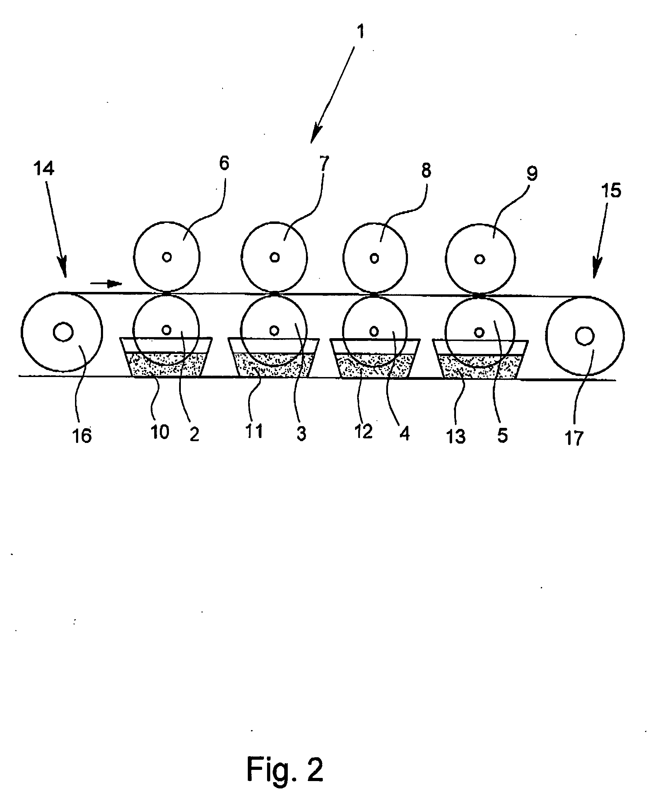

In Fig. 2 ist eine Dekortiefdruckeinrichtung 1 einer Vorrichtung dargestellt. Die Tiefdruckeinrichtung 1 weist vier gravierte Druckzylinder 2, 3, 4, 5 auf. Jedem Druckzylinder 2, 3, 4, 5 ist ein ungravierter Gegendruckzylinder 6, 7, 8, 9 zugeordnet. Im übrigen taucht jeder der Druckzylinder 2, 3, 4, 5 in einen Farbbehälter 10, 11, 12 ,13 ein. Dabei befindet sich im Farbbehälter 10 die Farbe gelb (Y), im Farbbehälter 11 die Farbe cyan (C), im Farbbehälter 12 die Farbe magenta (M) und im Farbbehälter 13 die Farbe schwarz (K). Den Druckzylindern 2, 3, 4, 5 vorgeschaltet ist eine Abwickeleinrichtung 14, nachgeschaltet ist eine Aufwi keleinrichtung 15. Von der Abwickeleinrichtung 14 wird unbedrucktes Druckpapier 16 abgewickelt, das anschließend im Tiefdruckverfahren durch die Druckzylinder 2, 3, 4, 5 bedruckt wird. Anschließend wird das bedruckte Druckpapier 17 wieder aufgewickelt.

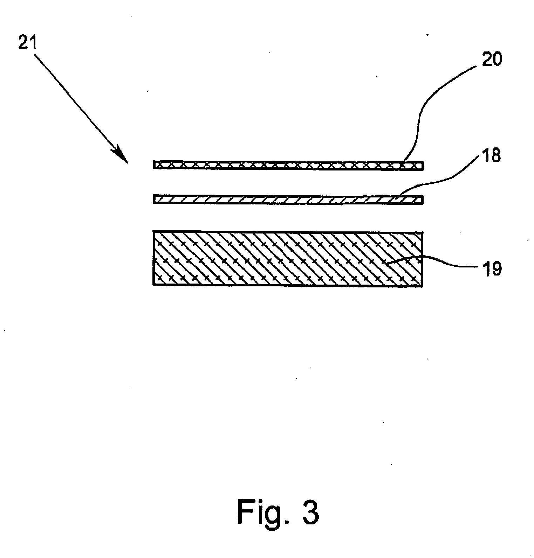

Wie zuvor bereits ausgeführt worden ist, wird das bedruckte Druckpapier 17 nach dem Bedrucken beharzt und anschließend geschnitten, so daß sich Druckbögen 18 ergeben, von denen einer schematisch in Fig. 3 dargestellt ist. Der Druckbogen 18 wird mit dem Grundkörper 19 und einer Schutzschicht 20 zu einem Plattenkörper 21 verpreßt, der anschließend beispielsweise als Paneele im Boden-, Wand- oder Deckenbereich oder aber als Möbelteil im Möbelbereich eingesetzt werden kann.

### Bezugszeichenliste

- 1: Tiefdruckeinrichtung
- 2: Druckzylinder
- 3: Druckzylinder
- 4: Druckzylinder
- 5: Druckzylinder
- 6: Gegendruckzylinder
- 7: Gegendruckzylinder
- 8: Gegendruckzylinder
- 9: Gegendruckzylinder
- 10: Farbbehälter
- 11: Farbbehälter
- 12: Farbbehälter
- 13: Farbbehälter
- 14: Abwickeleinrichtung
- 15: Aufwickeleinrichtung
- 16: unbedrucktes Druckpapier
- 17: bedrucktes Druckpapier
- 18: Druckbogen
- 19: Grundkörper
- 20: Schutzschicht
- 21: Plattenkörper

- A: Vorbereitung
- B: Scannen
- C: Überarbeitung
- D: Rapportierung
- E: Umwandlung
- F: Farbmusterung Proof
- G: Kalibrierung
- H: Gravur
- I: Druck
- J: Beharzen
- K: Schneiden
- L: Pressen

## Patentansprüche

1. Verfahren zur Herstellung von Plattenkörpern (21) zur Verwendung im Boden-, Wand- oder Deckenbereich, wie Paneelen, sowie im Möbelbereich, wobei der Plattenkörper (21) einen Grundkörper (19) aufweist, der mit einem beharzten, ein Dekor aufweisenden Druckbogen (18) aus bedruckten Druckpapier verpresst wird, wobei das Druckpapier mit einem sich auf dem Druckpapier vielfach wiederholenden Dekor im Tiefdruckverfahren mittels einer gravierte Druckzylinder (2, 3, 4, 5) aufweisenden Tiefdruckeinrichtung (1) bedruckt und das Druckpapier vor dem Verpressen in eine Vielzahl von Druckbögen (18) zerteilt wird,
**dadurch gekennzeichnet,**
**dass** vor dem Druck des Dekors eine Dekorvorlage vorbereitet und auf einer Anzeigeeinrichtung einer Rechnereinrichtung im RGB-Farbsystem angezeigt wird, dass die RGB-Daten von der Rechnereinrichtung in CMYK-Daten des CMYK-Farbsystems umgewandelt werden, dass ein Proof des an der Anzeigeeinrichtung angezeigten Dekors mittels eines Digitalproofdruckers im CMYK-Farbsystem erstellt wird, dass ein automatischer Abgleich der Farben der auf der Anzeigeeinrichtung im RGB-Farbsystem dargestellten Dekorvorlage mit den Farben des im CMYK-Farbsystems gedruckten Proofs vorgenommen wird, dass eine automatische Anpassung der CMYK-Daten erfolgt und dass die Druckzylinder auf der Grundlage der angepassten CMYK-Daten graviert werden.

2. Verfahren nach Anspruch 1, **dadurch gekennzeichnet, daß** vier Druckzylinder (2, 3, 4, 5) vorgesehen sind und daß die Druckfarbenreihenfolge gelb (Y), cyan (C), magenta (M) und schwarz (K) oder schwarz (K), cyan (C), magenta (M) und gelb (Y) ist.

3. Verfahren nach Anspruch 1 oder 2, **dadurch gekennzeichnet, daß** die vorbereitete Dekorvorlage eingescannt wird und daß, vorzugsweise, die Daten der eingescannten Dekorvorlage zur Rapportierung überarbeitet werden.

4. Verfahren nach einem der vorhergehenden Ansprüche, **dadurch gekennzeichnet, daß** eine Farbmusterung des an der Anzeigeeinrichtung angezeigten Dekors vorgenommen wird.

5. Verfahren nach einem der vorhergehenden Ansprüche, **dadurch gekennzeichnet, daß** die Farben und/oder das Design eines Kalibrierungscharts zur Kalibrierung der von der Rechnereinrichtung umgewandelten CMYK-Daten verwendet werden.

6. Verfahren nach einem der vorhergehenden Ansprüche, **dadurch gekennzeichnet, daß** nach der Kalibrierung ein weiterer Kalibrierungschart aufgrund kalibrierter CMYK-Daten erstellt wird.

7. Verfahren nach einem der vorhergehenden Ansprüche, **dadurch gekennzeichnet, daß** die gleichen Farbpigmente und/oder Farbzusammensetzungen für die Druckfarben des Proofdruckers und der Druckzylinder (2, 3, 4, 5) der Tiefdruckeinrichtung (1) verwendet werden.

## Claims

1. Method for manufacturing plate-shaped bodies (21) for application in the range of floors, walls or ceilings, such as panels, as well as in the furniture range, wherein the plate-shaped body (21) comprises a basic body (19), which is pressed together with a printing sheet (18) of printed printing paper, which printing sheet is provided with resin and comprises a decor, wherein, by gravure printing by means of a gravure printing device (1) comprising engraved printing cylinders (2, 3, 4, 5), the printing paper is imprinted with a decor which is repeated on the printing paper a plurality of times, and wherein the printing paper, prior to pressing, is divided into a plurality of printing sheets (18),
**characterized in that**
prior to printing the decor, a decor pattern is prepared and is represented in the RGB color system on a display device of a computer device, that the RGB data are converted into CMYK data of the CMYK color system by the computer device, that a proof of the decor represented on the display device is made by means of a digital proof printer in the CMYK color system, that an automatic comparison is made of the colors of the decor pattern represented on the digital device in the RGB color system with the colors of the proof printed in the CMYK color system, that an automatic adaptation of the CMYK data is performed and that the printing cylinders are engraved on the basis of the adapted CMYK data.

2. Method according to claim 1, **characterized in that** four printing cylinders (2, 3, 4, 5) are provided and that the sequence of the printing colors is yellow (Y), cyan (C), magenta (M) and black (K) or black (K), cyan (C), magenta (M) and yellow (Y).

3. Method according to claim 1 or 2, **characterized in that** the prepared decor pattern is scanned in and that preferably the data of the scanned-in decor pattern are revised for repeat determination.

4. Method according to any of the preceding claims, **characterized in that** a color matching of the decor represented on the display device is performed.

5. Method according to any of the preceding claims, **characterized in that** the colors and/or the design of a calibration chart are applied for calibration of the CMYK data converted by the computer device.

6. Method according to any of the preceding claims, **characterized in that** after calibration, a further calibration chart on the basis of calibrated CMYK data is made.

7. Method according to any of the preceding claims, **characterized in that** the same color pigments and/or color compositions are used for the printing inks of the proof printer and the printing cylinders (2, 3, 4, 5) of the gravure printing device (1).

## Revendications

1. Procédé pour la fabrication de corps en forme de plaques (21) à utiliser dans le domaine des sols, des murs ou des plafonds, tels que des panneaux, et également dans le domaine du mobilier, les corps en forme de plaques (21) présentant un corps de base (19) qui est comprimé avec une feuille (18) enduite de résine, présentant une décoration, constituée de papier d'impression imprimé, le papier d'impression étant imprimé avec une décoration qui se répète à de multiples reprises sur le papier d'impression dans un procède d'impression en creux au moyen d'un mécanisme d'impression en creux (1) présentant des cylindres d'impression gravés (2, 3, 4, 5) et le papier d'impression étant subdivisé, avant la compression en une multitude de feuilles (18), **caractérisé en ce que**, avant l'impression de la décoration, on prépare un original de décoration et on l'affiche sur un mécanisme d'affichage d'un ordinateur dans le système de couleurs RGB ; **en ce que** les données RGB sont transformées par l'ordinateur en données CMYK du système de couleurs CMYK ; **en ce qu'**on produit une épreuve de la décoration affichée sur le mécanisme d'affichage au moyen d'une imprimante d'épreuvage numérique dans le système de couleurs CMYK ; **en ce qu'**on procède à un alignement automatique des couleurs de l'original de décoration représenté sur le mécanisme d'affichage dans le système de couleurs RGB avec les couleurs de l'épreuve imprimée dans le système de couleurs CMYXC ; **en ce qu'**une adaptation des données CMYK a lieu de manière automatique ; et **en ce que** les cylindres d'impression sont gravés sur base des données CMYK adaptées.

2. Procédé selon la revendication 1, **caractérisé en ce qu'**on prévoit quatre cylindres d'impression (2, 3, 4, 5) et **en ce que** la succession des couleurs d'impression est : jaune (Y), bleu-vert (C), magenta (M) et noir (K) ou noir (K), bleu-vert (C), magenta (M) et (jaune) (Y).

3. Procédé selon la revendication 1 ou 2, **caractérisé en ce que** l'original de décoration préparé est scanné ; et **en ce que**, de préférence, les données de l'original de décoration scannées sont traitées pour être rapportées.

4. Procédé selon l'une quelconque des revendications précédentes, **caractérisé en ce qu'**on procède à un examen des couleurs de la décoration affichée sur le mécanisme d'affichage.

5. Procédé selon l'une quelconque des revendications précédentes, **caractérisé en ce qu'**on utilise les couleurs et/ou le motif d'un diagramme d'étalonnage pour l'étalonnage des données CMYK transformées par l'ordinateur,

6. Procédé selon l'une quelconque des revendications précédentes, **caractérisé en ce que**, après l'étalonnage, on élabore un diagramme d'étalonnage supplémentaire sur base des données CMYK étalonnées.

7. Procédé selon l'une quelconque des revendications précédentes, **caractérisé en ce qu'**on utilise les mêmes pigments et/ou les mêmes compositions de couleurs pour les encres de l'imprimante d'épreuvage et celles des cylindres d'impression (2, 3, 4, 5) du mécanisme d'impression en creux (1).
